# EUROPÄISCHE PATENTSCHRIFT

(11) **EP 1 086 329 B1**
(45) Veröffentlichungstag und Bekanntmachung des Hinweises auf die Patenterteilung: **06.03.2002**
(21) Anmeldenummer: 99927991.2
(22) Anmeldetag: 15.06.1999
(51) Int. Cl.: F16L 19/02

(54) **ROHRVERSCHRAUBUNG MIT AXIALDICHTUNG**
PIPE UNION WITH AXIAL SEALING
RACCORD VISSE A GARNITURE D'ETANCHEITE AXIALE

(30) Priorität: 15.06.1998 DE 29810700 U; 17.05.1999 DE 29908670 U
(43) Veröffentlichungstag der Anmeldung: 28.03.2001
(73) Patentinhaber: Armaturenfabrik Hermann Voss GmbH + Co. KG, 51688 Wipperfürth (DE)
(72) Erfinder: HESTER, Hilmar, D-51688 Wipperfürth (DE); KAMINSKI, Volker, D-58553 Halver (DE)
(74) Vertreter: Zapf, Christoph, Dipl.-Ing.
(86) Internationale Anmeldenummer: EP9904140
(87) Internationale Veröffentlichungsnummer: WO9966249

(56) Entgegenhaltungen:
- DE-A- 19 512 464
- DE-U- 9 320 306
- FR-A- 1 257 902
- GB-A- 2 288 647
- US-A- 4 805 944

## Beschreibung

Die vorliegende Erfindung betrifft eine Rohrverschraubung zum Anschluß einer insbesondere metallischen Rohrleitung, bestehend aus einem Anschlußkörper, einem mit dem Anschlußkörper verschraubbaren Überwurf-Verschraubungselement und einem zwischen dem Anschlußkörper und dem Verschraubungselement angeordneten Rohr-Halteelement, wobei der Anschlußkörper eine Aufnahmeöffnung für die Rohrleitung mit einer radialen Stufenfläche zur axialen Abstützung der Rohrleitung aufweist, und wobei ein Dichtring zur Anordnung axial zwischen der Stufenfläche und einer endseitigen Stirnringfläche der Rohrleitung vorgesehen ist.

Eine derartige Rohrverschraubung ist zunächst aus der DE-PS 2 223 417 bekannt. Hierbei ist als axiales Dichtungselement ein elastischer Dichtring vorgesehen, der zusätzlich mit einem Winkelstützring versehen ist, um zu verhindern, daß der Dichtungsring beim Anziehen der Verschraubung aus dem axialen Spalt zwischen der Stirnfläche der Rohrleitung und der gegenüberliegenden Stufenfläche im Anschlußkörper radial nach innen herausgedrückt wird. Dieses Dichtungselement weist eine relativ große axiale Länge bzw. Dicke auf, so daß die Eindringtiefe der Rohrleitung in den Anschlußkörper begrenzt wird.

Eine weitere Rohrverschraubung der genannten Art ist in dem DE-GM 93 20 306 beschrieben. Hierbei wird ein Dichtungsring verwendet, der aus einem Metallkern und einer darauf aufgebrachten elastischen Beschichtung besteht.

Bei beiden bekannten Rohrverschraubungen ist von Nachteil, daß beim Anziehen des Verschaubungselementes (Überwurfmutter) - bedingt durch das Einschneiden eines Schneidringes - die Rohrleitung axial in den Anschlußstutzen hinein und daher jeweils gegen den elastischen Dichtring bewegt wird. Dies stellt bei den bekannten Versionen der Dichtungselemente eine relativ hohe Beanspruchung des Dichtungsmaterials dar. Bei sogenannter Übermontage (Anziehen der Verschraubung mit zu hohem Drehmoment) könnte es sogar zu einer Zerstörung der elastischen Dichtung kommen.

In der DE 195 12 464 A1 ist eine weitere solche Rohrverschraubung beschrieben, deren axiales Dichtungselement aus einem starren, formstabilen und daher als Abstandhalter zwischen der Rohrleitung und der Anlagefläche des Anschlußkörpers wirkenden Distanzring und einem mit dem Distanzring verbundenen elastischen Dichtring besteht. Diese Rohrverschraubung hat sich im wesentlichen gut bewährt, weil beim Anziehen der Rohrverschraubung die Rohrleitung sicher über den Distanzring abgestützt wird, so daß der elastische Dichtring sehr definiert verpreßt wird und über den Distanzring ein axial durchgehender Kraftfluß erreicht wird. Indem der Distanzring radial innen und der Dichtring radial außen angeordnet sind, wird zudem eine gute Kammerung des elastischen Dichtrings erreicht.

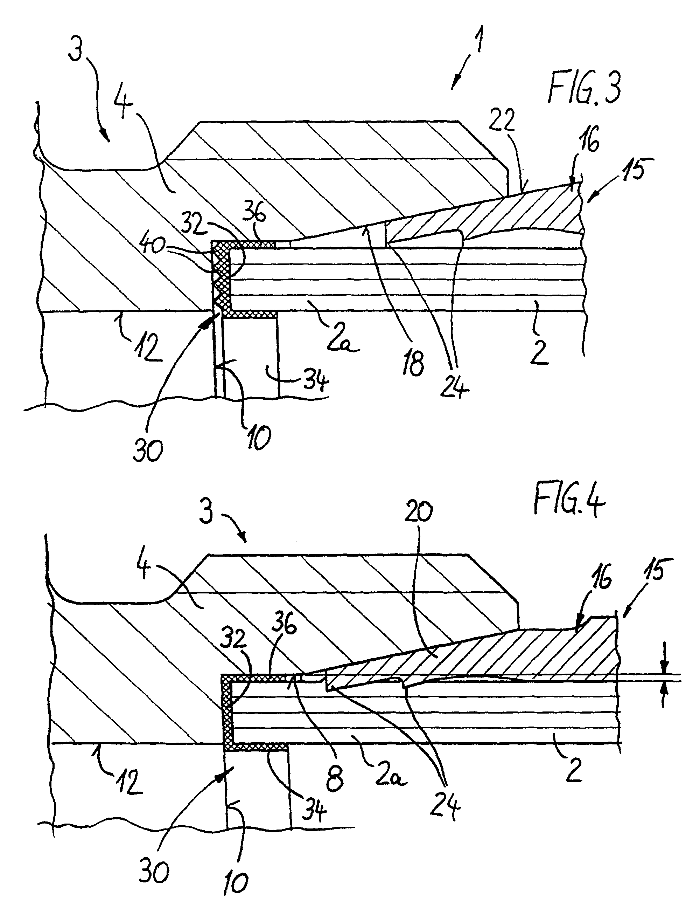

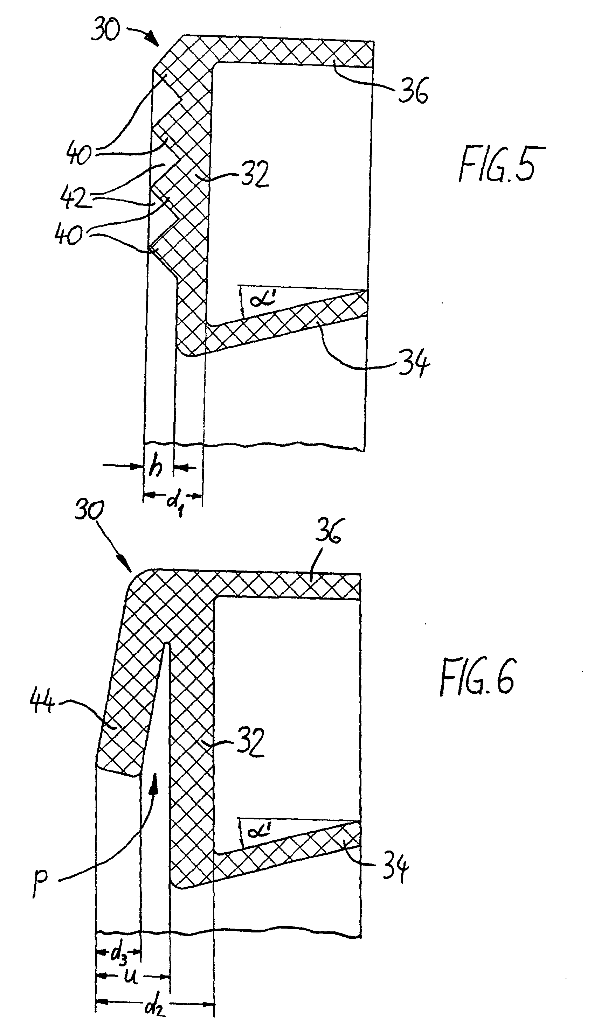

Schließlich beschreibt die DE 40 41 677 A1 unter anderem zwei Ausführungsformen, wobei entweder ein elastischer Dichtring in einer Ausnehmung der anschlußkörperseitigen Anlagefläche versenkt angeordnet ist (Fig. 3) oder für den Dichtring eine Aufnahmekammer durch eine axiale und radiale Ausnehmung der Rohrleitung gebildet ist (Fig. 4). Diese Ausführungen machen besondere Arbeitsgänge bei der Herstellung der Einzelteile erforderlich, so daß zum Teil keine Normteile verwendet werden können.

Dokument US-A-4 805 944 offenbart eine Rohrverschraubung gemäß dem Oberbegriff des Anspruchs 1.

Der vorliegenden Erfindung liegt die Aufgabe zugrunde, eine Rohrverschraubung der genannten Art zu schaffen, für die grundsätzlich übliche Normteile verwendet werden können, wobei aber dennoch mit preiswerten und konstruktiv einfachen Mitteln eine sichere Abdichtung durch einen normüblichen Montageablauf erreicht wird.

Erfindungsgemäß wird dies durch die Merkmale des kennzeichnenden Teils des Anspruchs 1 erreicht.

Durch diese vorteilhafte Ausgestaltung können zunächst übliche Normteile verwendet werden, indem lediglich auf das stirnseitige Ende der Rohrleitung der erfindungsgemäße Dichtring aufgesetzt bzw. aufgesteckt zu werden braucht. Der Dichtring sitzt dann kraftschlüssig auf dem Rohrende. Die Rohrmontage kann dann in üblicher Weise durchgeführt werden. Danach wird eine gute, praktisch formschlüssige Kammerung der Dichtung erreicht. Der Dichtring kann dabei mit sehr kleinen Abmessungen hergestellt werden, so daß sich auch die Eindringtiefe der Rohrleitung in den Anschlußstutzen kaum nennenswert reduziert. Der erfindungsgemäße Dichtring bewirkt einerseits eine axiale Abdichtung, andererseits aber vorteilhafterweise auch eine zusätzliche radiale Abdichtung nach außen zwischen der Außenfläche des Rohrendes und der Innenfläche der Aufnahmeöffnung des Anschlußkörpers. Hierdurch wirkt der Dichtring gleichzeitig auch als Zentrierelement für die Rohrleitung; er bildet praktisch einen "Zentrier-Dichtring".

Vorteilhafterweise eignet sich der erfindungsgemäße Dichtring auch zum Nachrüsten von üblichen Normverschraubungen. Zudem ist in den meisten Fällen auch eine wiederholte Montage, d. h. eine Wiederverwendung des Dichtrings möglich. Im Bedarfsfall kann er jedoch auch sehr kostengünstig ausgetauscht werden.

Weitere vorteilhafte Ausgestaltungsmerkmale der Erfindung sind in den Unteransprüchen sowie der folgenden Beschreibung enthalten.

Anhand von mehreren in der Zeichnung dargestellten, bevorzugten Ausführungsbeispielen soll im folgenden die Erfindung näher erläutert werden. Dabei zeigen:
- Fig. 1: eine halbgeschnittene Seitenansicht einer erfindungsgemäßen Rohrverschraubung in einer Ausführung als sogenannte Schneidring-Verschraubung in einer Explosionsdarstellung vor bzw. während der Rohrmontage,
- Fig. 2: eine Darstellung analog zu Fig. 1, jedoch ohne den Anschlußkörper sowie mit einem auf das Rohrende aufgesetzten erfindungsgemäßen Dichtring,
- Fig. 3: einen vergrößerten Axialschnitt des Bereichs III gemäß Fig. 2 in einem in den Anschlußkörper eingesetzten Zustand des mit dem erfindungsgemäßen Dichtring ausgestatteten Rohrendes vor dem Kraftanzug,
- Fig. 4: eine Ansicht analog zu Fig. 3, jedoch nach erfolgter Montage durch Kraftanzug,
- Fig. 5: eine stark vergrößerte Schnittansicht einer ersten Ausführungsform des erfindungsgemäßen Dichtrings,
- Fig. 6: eine Ansicht analog zu Fig. 5 einer zweiten Ausführungsform des Dichtrings,
- Fig. 7: einen Halb-Längsschnitt durch eine weitere Ausführungsform der erfindungsgemäßen Rohrverschraubung im montierten Zustand,
- Fig. 8: einen Längsschnitt analog zu Fig. 7 eines umgeformten Rohrendes mit vormontiertem Dichtring,
- Fig. 9: eine Schnittdarstellung nur des Rohrendes entsprechend Fig. 8,
- Fig. 10: eine Schnittdarstellung des Dichtrings entsprechend Fig. 8 in einer lagrichtigen Stellung relativ zu Fig. 9 zur Vormontage auf dem Rohrende durch axiales Aufsetzen,
- Fig. 11: eine dritce Ausführungsform der erfindungsgemäßen Rohrverschraubung in einer Darstellung analog zu Fig. 7 und
- Fig. 12: eine Ansicht analog zu Fig. 5, 6 bzw. 10 des Dichtrings der Ausführung nach Fig. 11 vor seiner Montage (unverformter Zustand).

In den verschiedenen Figuren der Zeichnung sind gleiche Teile stets mit den gleichen Bezugszeichen versehen und werden daher in der Regel auch jeweils nur einmal beschrieben.

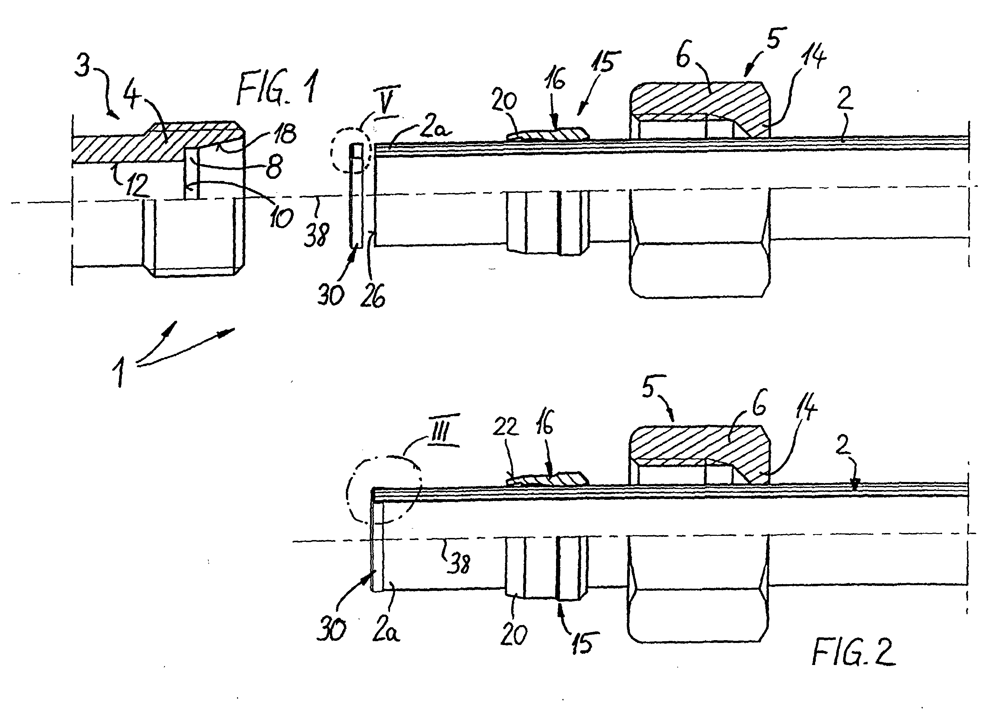

Wie sich zunächst aus Fig. 1 ergibt, dient eine erfindungsgemäße Rohrverschraubung 1 zum Anschluß einer insbesondere metallischen Rohrleitung 2. Die Rohrverschraubung 1 besteht aus einem Anschlußkörper 3, bei dieser ersten Ausführung nach Fig. 1 bis 4 in Form eines ein Außengewinde aufweisenden Anschlußstutzens 4, sowie aus einem Überwurf-Verschraubungselement 5, hier einer Überwurfmutter 6, die mit ihrem Innengewinde auf das Außengewinde des Anschlußstutzens 4 aufgeschraubt bzw. aufschraubbar ist. Der Anschlußstutzen 4 besitzt eine Aufnahmeöffnung 8 für ein Ende 2a der Rohrleitung 2, wobei die Aufnahmeöffnung 8 von einer Bohrung gebildet ist, die über eine radiale Stufenfläche 10 in einen durchmesserreduzierten, vorzugsweise mit dem Innendurchmesser der Rohrleitung 2 zumindest annähernd fluchtenden Kanal 12 übergeht (vgl. hierzu Fig. 3 und 4). Die Stufenfläche 10 bildet ein Widerlager zur axialen Abstützung der Rohrleitung 2 während des Anziehens der Überwurfmutter 6.

Zwischen dem Anschlußstutzen 4 und einem radial nach innen weisenden Ringbund 14 der Überwurfmutter 6 ist ein Rohr-Halteelement 15 - hier in Form eines die Rohrleitung 2 umschließenden, metallischen Schneidrings 16 - angeordnet. Die Aufnahmeöffnung 8 des Anschlußstutzens 4 erweitert sich in ihrem der Überwurfmutter 6 zugekehrten Endbereich über einen Innenkonus 18, in den der Schneidring 16 mit einem Schneidringteil 20 eingreift und hierbei mit einem Außenkonus 22 mit dem Innenkonus 18 derart zusammenwirkt, daß durch axiales Verspannen beim Anziehen der Überwurfmutter 6 der Schneidring 16 im Bereich des Schneidringteils 20 radial nach innen verformt (verengend gestaucht) wird und mit mindestens einer, vorzugsweise mit zwei in axialer Richtung voneinander beabstandeten, radial nach innen weisenden, ringförmigen Schneidkanten 24 unter Kerbwirkung insbesondere formschlüssig in das Material der Rohrleitung 2 eindringt. Der Schneidring 16 dient so insbesondere der mechanischen Halterung der Rohrleitung 2 über die Form- oder zumindest Kraftformschlußverbindung der Schneidkanten 24. Der Schneidring 16 hat aber grundsätzlich auch eine metallische Dichtfunktion.

Zusätzlich dazu ist allerdings innerhalb der Aufnahmeöffnung 8 axial zwischen der Stufenfläche 10 und einer Stirnringfläche 26 der Rohrleitung 2 ein Dichtring 30 angeordnet. Es handelt sich somit grundsätzlich um eine "Axialdichtung".

Wie sich nun insbesondere aus den vergrößerten Darstellungen der Fig. 3 bis 6 ergibt, ist der Dichtring 30 erfindungsgemäß - zumindest abschnittsweise - derart ringkappenförmig ausgebildet, daß er auf das stirnseitige Ende der Rohrleitung 2 zumindest kraftschlüssig aufsetzbar ist und dabei die Rohrwandung axial sowie vorzugsweise radial innen und außen über eine bestimmte axiale Länge hinweg umschließt. Hierzu weist der Dichtring 30 einen im wesentlichen U-förmigen Ringquerschnitt mit einem sich radial erstreckenden, axial zwischen der Stutzen-Stufenfläche 10 und der Rohr-Stirnringfläche 26 anzuordnenden Dichtungsabschnitt 32 und zwei sich im wesentlichen axial und koaxial zueinander erstreckenden Ringstegabschnitten 34 und 36 zur kraftschlüssigen Anlage an der Rohrwandung auf. Der Dichtring 30 ist hierdurch einfach auf das Rohrleitungsende 2a stirnseitig aufsteckbar. Er sitzt dann kraftschlüssig und somit während der Montage praktisch unverlierbar auf dem Rohrende 2a (Fig. 2). Um diesen Kraftschluß zu erreichen, erstreckt sich mindestens einer der beiden Ringstegabschnitte 34, 36, im dargestellten Ausführungsbeispiel bevorzugt der innere Ringstegabschnitt 34, im unmontierten, d. h. noch von der Rohrleitung 2 getrennten und daher unverformten Zustand ausgehend von dem Dichtungsabschnitt 32 in einem spitzen Winkel α' schräg zur Axialrichtung (Längsachse 38) in Richtung des anderen Ringstegabschnittes 36. Hierzu wird auf die Fig. 5 und 6 verwiesen. Hierdurch wird eine Verengung des Aufnahmequerschnittes für das Rohrende 2a erzeugt, wobei der Schrägverlauf gerade des radfal inneren Ringstegabschnittes 34 insofern von besonderem Vorteil ist, als dieser dann fest unter Vorspannung innen im Rohr an der Wandung anliegt. Dies ist vor allem bei größeren Strömungsgeschwindigkeiten eines durch die Rohrverschraubung 1 geführten Strömungsmediums vorteilhaft, da wegen der Anlagevorspannung ein Abheben des Abschnittes 34 von der Rohr-Innenwandung weitgehend ausgeschlossen ist.

In der in den Fig. 3, 4 und 5 veranschaulichten Ausführungsform des Dichtrings 30 weist dieser auf seiner der Stufenfläche 10 des Anschlußstutzens 4 zugekehrten Seite mindestens eine, vorzugsweise aber mehrere (wie dargestellt beispielsweise vier) umlaufende Dichtrippen 40 auf. Zwischen den Dichtrippen 40 sind demzufolge jeweils rillenartige Ringvertiefungen 42 gebildet. Wie sich aus Fig. 3 und 4 ergibt, wird durch das Anziehen der Überwurfmutter der Schneidring mit seinen Schneidkanten 24 in die Rohrleitung 2 eingeschnitten, wodurch die Rohrleitung 2 bei weitergehendem Anziehen axial in Richtung der Stufenfläche 10 bewegt wird. Hierdurch wird der Dichtring 30 verpreßt, so daß es zu einer - je nach Material - elastischen oder plastischen Verformung der Dichtrippen 40 kommt (Fig. 4). Dadurch werden labyrinthdichtungsartige Zonen mit feinen Kapillaren gebildet, die zur Aufnahme von eventuellen Leckagen des jeweiligen Druckmittels dienen.

In der in Fig. 6 veranschaulichten Alternativausführung weist der Dichtring 30 auf seiner der Stufenfläche 10 zugekehrten Seite anstelle von Dichtrippen eine ringförmige, umlaufende Dichtlippe 44 auf. Diese Dichtlippe erstreckt sich - insbesondere ausgehend vom äußeren Umfangsbereich - im unmontierten Zustand, d. h. vor dem Anziehen der Verschraubung, schräg axial in Richtung der Stufenfläche 10 sowie radial nach innen. Hierdurch wird eine sehr gute Abdichtung erreicht, die bei Druckbeaufschlagung der Verschraubung vorteilhafterweise noch verbessert wird, indem der Druck p in einem Ringspalt zwischen dem Dichtungsabschnitt 32 und der Dichtlippe 44 wirkt, so daß die Anlagekraft der Dichtlippe 44 auf der Stufenfläche 10 proportional zum Druck ist und somit bei steigendem Druck ebenfalls erhöht wird.

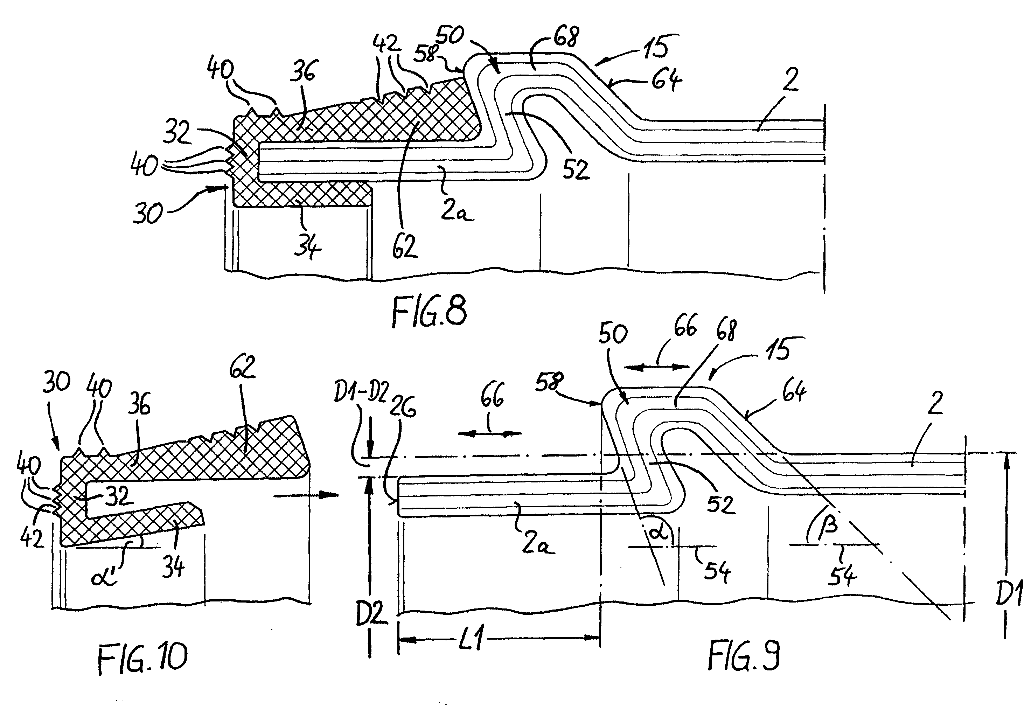

In einer Weiterbildung der Erfindung (vgl. hierzu Fig. 8, 10 und 12) kann der Dichtring 30 auch in seinem äußeren Umfangsbereich radiale, umlaufende Dichtrippen 40 zur Anlage am Innenumfang der Aufnahmeöffnung 8 des Anschlußstutzens 4 und/oder rillenarige Ringvertiefungen 42 aufweisen. Auch diese Dichtrippen 40 und/oder Rillen 42 werden beim Anziehen der Verschraubung elastisch oder plastisch verformt, und zwar radial zwischen der Rohrwandung und der Aufnahmeöffnung 8 (vgl. den in Fig. 4, 7 und 11 jeweils dargestellten Montagezustand).

Der Dichtring 30 besteht bevorzugt aus einem durch Verpressen plastisch verformbaren Material. Dies bedeutet, daß das Material des Dichtrings 30 beim Verpressen plastisch fließt. Besonders geeignet ist Polytetrafluorethylen (PTFE); dieses Material ist auch unter der Marke Teflon bekannt. Alternativ kann der Dichtring 30 jedoch auch aus einem beim Verpressen elastisch verformbaren Material, insbesondere einem Elastomer, bestehen. Geeignete Materialien sind beispielsweise Nitrilkautschuk (NBR) oder ein Fluorelastomer auf der Basis von Vinylidenfluorid-Hexafluorpropylen-Copolymerisaten, beispielsweise wie unter der Marke Viton bekannt.

Es sei noch erwähnt, daß der erfindungsgemäße Dichtring 30 im Hinblick auf die Größe solcher üblichen Rohrverschraubungen sehr klein ausgebildet ist. Der Außendurchmesser beträgt beispielsweise etwa 10 bis 14 mm. Gemäß Fig. 5 beträgt die axial gemessene Dicke d₁ des Dichtungsabschnittes 32 einschließlich der unverformten Dichtrippen 40 etwa 0,4 bis 0,5 mm. Die Höhe h der Dichtrippen 40 beträgt dabei etwa 0,2 bis 0,3 mm. Bei der Ausführung nach Fig. 6 beträgt die axiale Dicke d₂ des Dichtungsabschnittes 32 einschließlich der unverformten Dichtlippe 44 etwa 0,8 mm. Der axiale Überstand u der unverformten Dichtlippe 44 ausgehend von der Außenseite des Dichtungsabschnittes 32 beträgt etwa 0,5 mm. Die Dicke d₃ der Dichtlippe 44 beträgt etwa 0,3 mm. Der Schrägstellungswinkel α des inneren Ringstegabschnittes 34 beträgt im unmontierten, unverformten Zustand etwa 15°. Die Erfindung ist natürlich nicht auf diese konkreten Bemessungen beschränkt.

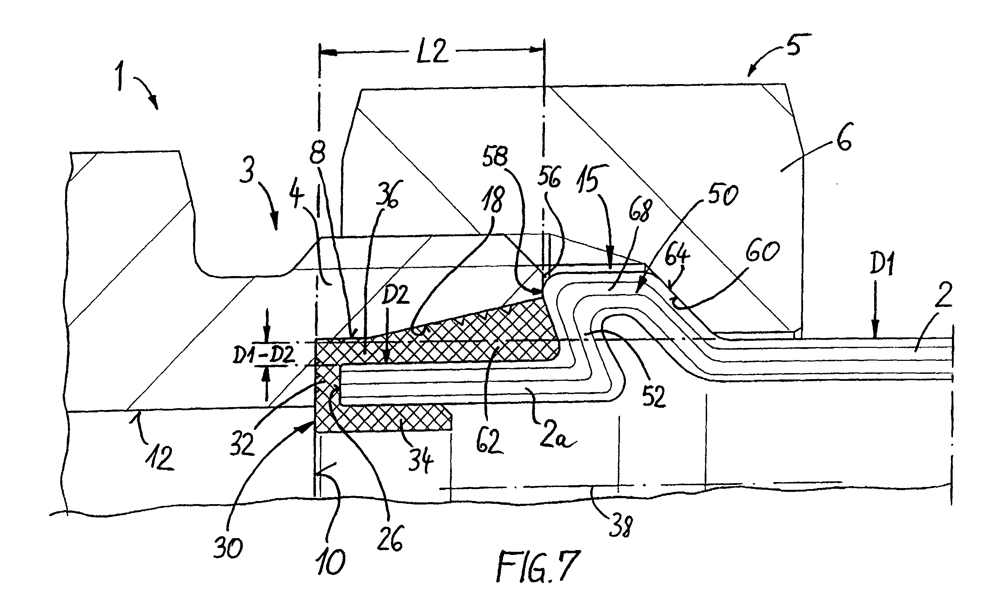

Im folgenden sollen die Besonderheiten der Ausführung nach Fig. 7 bis 10 erläutert werden, wobei gleiche Teile wie in Fig. 1 bis 6 mit gleichen Bezugszeichen versehen sind und nicht nochmals beschrieben werden.

Gemäß Fig. 7 bis 9 ist hierbei das Rohr-Halteelement 15 mit der Rohrleitung 2 fest verbunden. Vorzugsweise weist die Rohrleitung 2 dazu einen umfangsgemäßen, durch Stauchumformen gebildeten Ringwulst 50 auf, der zur formschlüssigen Halterung der Rohrleitung 2 zwischen dem Anschlußstutzen 4 und der Überwurfmutter 6 eingespannt gehalten wird.

Vorzugsweise ist die Rohrleitung 2 endseitig derart umgeformt, daß ihr freies, sich an den Ringwulst 50 anschließendes, achsparalleles Rohrende 2a einen gegenüber dem ursprünglichen Rohrdurchmesser D1 reduzierten Enddurchmesser D2 aufweist, so daß innerhalb der Aufnahmeöffnung 8 des Anschlußstutzens 4 radial zwischen diesem und dem Rohrende 2a eine um die Durchmesser-Differenz D1 minus D2 vergrößerte Dichtungskammer zur Aufnahme des Dichtrings 30 gebildet ist. Hierdurch kann vorteilhafterweise der Dichtring 30 ebenfalls entsprechend vergrößert sein, und zwar derart, daß er unter elastischer oder plastischer Verpressung die gesamte bevorzugt gebildete Dichtungskammer ausfüllt. Mit Vorteil handelt es sich bei dem hier verwendeten Dichring 30 um ein vorgeformtes Formteil nach Art einer Profildichtung mit einer speziell an die Form der Dichtungskammer angepaßten Form.

Weiterhin ist die Rohrleitung 2 bevorzugt im Bereich des Ringwulstes 50 derart umgeformt, daß der Ringwulst 50 auf seiner dem Anschlußstutzen 4 zugekehrten Seite einen schrägen Schulterabschnitt 52 mit einem zur Längsachse 38 (in Fig. 9 durch dazu parallele Strichpunktlinien 54 angedeutet) gemessenen, stumpfen Hinterschneidungswinkel α < 90° aufweist. Dadurch gelangt der Ringwulst 50 vorteilhafterweise an einer radialen Stirnfläche 56 des Anschlußstutzens 4 ausschließlich im radial äußeren Bereich mit einem im wesentlichen kreislinienförmigen Anlagekontaktbereich 58 zur Anlage; siehe Fig. 7. In diesem Anlagekontaktbereich 58 erfolgt somit eine metallische Abdichtung der Dichtungskammer radial nach außen, so daß der Dichtring 30 effektiv gekammert ist.

Auch in diesem Ausführungsbeispiel ist der Anschlußstutzen 4 vorzugsweise als Normteil einer üblichen Schneidringverschraubung ausgebildet, so daß er auch den die Aufnahmeöffnung 8 zur Mündung hin erweiternden Innenkonus 18 aufweist. Vorzugsweise handelt es sich auch bei der Überwurfmutter 6 um ein Normteil mit einem Innenkonus 60 zur Anlage an dem Ringwulst 50 der Rohrleitung 2. Entsprechend den einschlägigen Normen handelt es sich bei dem Innenkonus 18 des Anschlußstutzens 4 um einen 24°-Konus und bei dem Innenkonus 60 der Überwurfmutter 6 um einen 45°-Konus.

Hierbei weist nun der Dichtring 30 einen entsprechend dem Innenkonus 18 des Anschlußstutzens 4 erweiternd geformten Dichtabschnitt 62 auf, der gemäß Fig. 7 gekammert zwischen dem Anschlußstutzen 4, dem im Durchmesser reduzierten Rohrende 2a und dem Ringwulst 50 unter Vorspannung verpreßt angeordnet ist. Der erfindungsgemäße U-förmige Dichtungsabschnitt (32, 34, 36) geht mit dem äußeren Ringabschnitt 36 einstückig in den sich außenseitig konisch erweiternden Dichtabschnitt 62 über. Dabei ist der Dichtring 30 insgesamt so geformt, daß er im montierten Zustand (Fig. 7) unter insbesondere elastischer Verpressung innerhalb der Aufnahmeöffnung 8 den gesamten Zwischenraum axial und radial zwischen der Rohrleitung 2 bzw. dem Rohrende 2a und dem Anschlußstutzen 4 ausfüllt. Dies bedeutet, daß auch der Bereich der Hinterschneidung des Schulterabschnittes 52 von dem Dichtring 30 bzw. dem Dichtabschnitt 62 ausgefüllt wird.

Es ist ferner bevorzugt vorgesehen, daß der Ringwulst 50 der Rohrleitung 2 auf seiner der Überwurfmutter 6 zugekehrten Seite in Anpassung an deren Innenkonus 60 eine Flankenfläche 64 aufweist, die zur flächigen Anlage in dem Innenkonus 60 mit einem entsprechend spitzen Winkel β schräg zur Längsachse 38 (54) ausgerichtet ist (Fig. 9).

Wie sich weiterhin aus Fig. 7 und 9 ergibt, weist das freie Rohrende 2a ausgehend von der axialen Lage des linienförmigen Anlagekontaktbereiches 58 des Ringwulstes 50 eine Länge L1 (Fig. 9) auf, die derart kürzer als die zwischen der Stutzen-Stirnfläche 56 und der inneren Stufenfläche 10 gemessene Tiefe L2 (Fig. 7) der Aufnahmeöffnung 8 des Anschlußstutzens 4 ist, daß der axial zwischen der Stufenfläche 10 und der endseitigen Stirnfläche 26 des Rohrendes 2a angeordnete radiale Dichtungsabschnitt 32 der ringkappenförmigen Dichtung 30 definiert verpreßt wird. In diesem Zusammenhang ist von Bedeutung, daß die Rohrleitung 2 aufgrund der speziellen Umformung im Bereich des Ringwulstes 50 in axialer Richtung geringfügig elastisch verformbar ist, was in Fig. 9 durch zwei Doppelpfeile 66 veranschaulicht ist. Dabei bewirkt der Ringwulst 50 in seinem zwischen dem Anschlußstutzen 4 und der Überwurfmutter 6 eingespannten Zustand eine Anzugsbegrenzung.

Es sei noch erwähnt, daß durch den im wesentlichen linienförmigen Anlagekontaktbereich 58 und die dadurch bewirkte, relativ hohe Flächenpressung vorteilhafterweise auch ein Mitdrehen der Rohrleitung 2 beim Verschrauben vermieden wird. Die Anzugsbegrenzung wird hauptsächlich von einem im wesentlichen zylindrischen, äußeren Abschnitt 68 des Ringwulstes 50 bewirkt. Zwischen diesem Abschnitt 68 und dem schrägen Schulterabschnitt 52 ist ein Radius gebildet, durch den im Grunde der nur linienförmige Anlagekontaktbereich 58 entsteht. Die Durchmesser-Reduzierung D1 minus D2 liegt bei den meisten realisierten Ausführungsformen - je nach Größe bzw. Nennweite der Verschraubung 1 - im Bereich von etwa 1 mm.

Die Rohrverschraubung 1 ist aufgrund der beschriebenen Ausgestaltung für metallische Rohrleitungen im Hoch- und Höchstdruckbereich geeignet und dabei nahezu unempfindlich für eventuelle. Montagefehler und Herstellungstoleranzen. Aufgrund der erfindungsgemäßen Dichtung und deren spezieller Kammerung wird stets eine optimale Abdichtung gewährleistet, wenn die Montage bis zur Anzugsbegrenzung (Block-montage) erfolgt. Dies bedeutet, daß vorteilhafterweise die Dichtwirkung unabhängig von dem Anzugsdrehmoment der Verschraubung ist; es muß lediglich gewährleistet sein, daß der Ringwulst 50 zwischen den Verschraubungsteilen eingespannt ist.

Durch die Reduzierung des Durchmessers des Rohrendes 2a erstreckt sich die Dichtungskammer vorteilhafterweise über die ganze axiale Länge der Stutzen-Aufnahmeöffnung 8, wobei die gesamte, so gebildete, vergrößerte Dichtungskammer mit verpreßtem Dichtungsmaterial ausgefüllt ist. Vorteilhafterweise werden durch den axial zwischen dem Rohrende 2a und der Stutzen-Stufenfläche 10 angeordneten Abschnitt 32 der Dichtung eventuelle Längentoleranzen in diesem Bereich durch die Elastizität bzw. Verformbarkeit (eventuell plastisch) der Dichtung 30 ausgeglichen.

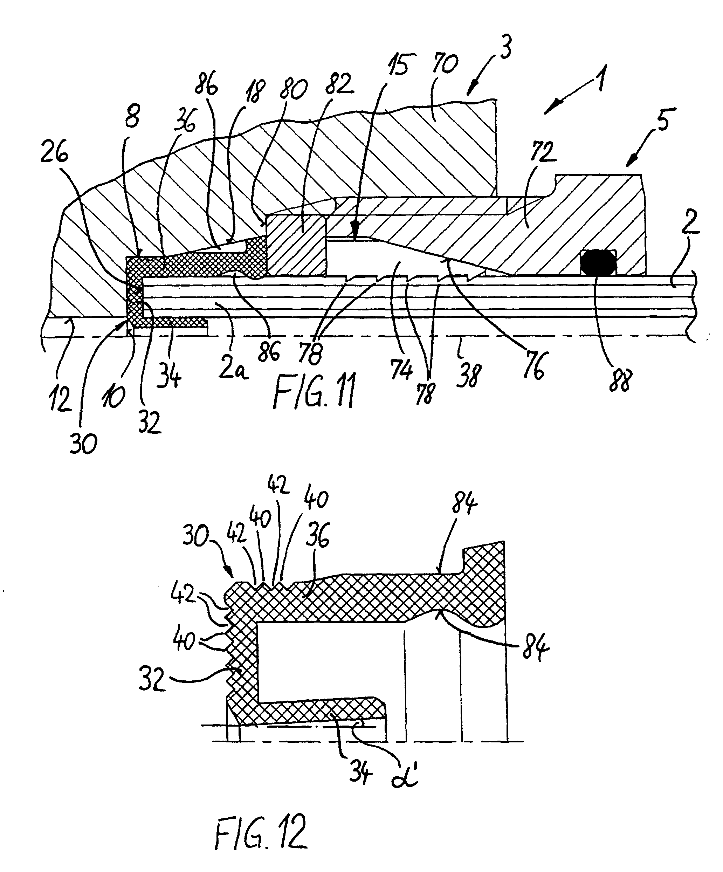

Was nun die Ausführung nach Fig. 11 und 12 betrifft, so handelt es sich um eine Hochdruck-Verschraubung, insbesondere für kleinere Rohr-Außendurchmesserbereiche. Der Anschlußkörper 3 ist ein Gehäusekörper 70 mit Innengewinde, und das Verschraubselement 5 ist als Überwurfschraube 72 ausgebildet, die mit ihrem Außengewinde in das Innengewinde des Gehäusekörpers 70 eingeschraubt wird. Das Rohr-Halteelement 15 ist von einem Zahnring 74 gebildet, der mit einem Innenkonus 76 der Überwurfschraube 72 beim Anziehen derart zusammenwirkt, daß der Zahnring 74 mit mindestens einer, vorzugsweise mehreren (wie dargestellt z. B. fünf) inneren Schneidkanten 78 in die Rohrleitung 2 eingreift. Axial zwischen der in den Gehäusekörper 70 eingeschraubten Überwurfschraube 72 und einer radialen Anlagefläche 80 ist innerhalb des Gehäusekörpers 70 ein Stützring 82 zur axialen Abstützung des Zahnringes 74 angeordnet. Vorteilhafterweise dient dieser Stützring 82 auch zu Kammerung des Dichtringes 30.

Vorzugsweise ist auch bei dieser Ausführung innerhalb des Gehäusekörpers 70 ein Innenkonus 18 vorhanden. Der in diesem Bereich liegende Abschnitt des Dichtringes 30 weist außen und/oder innen Ausnehmungen 84 (Fig. 12) derart auf, daß im montierten Zustand (Fig. 11) ringförmige Kapillarräume 86 entstehen, die zu einer guten Dichtwirkung beitragen, indem sie eventuelle Leckagen aufnehmen können. Zusätzlich ist direkt zwischen der Rohrleitung 2 und der Überwurfschraube 72 eine weitere Dichtung 88 angeordnet.

## Patentansprüche

1. Rohrverschraubung (1) zum Anschluß einer insbesondere metallischen Rohrleitung (2), bestehend aus einem Anschlußkörper (3), einem mit dem Anschlußkörper (3) verschraubbaren Überwurf-Verschraubungselement (5) und einem zwischen dem Anschlußkörper (3) und dem Verschraubungselement (5) angeordneten Rohr-Halteelement (15), wobei der Anschlußkörper (3) eine Aufnahmeöffnung (8) für die Rohrleitung (2) mit einer radialen Stufenfläche (10) zur axialen Abstützung der Rohrleitung (2) aufweist, und wobei ein Dichtring (30) zur Anordnung axial zwischen der Stufenfläche (10) und einer endseitigen Stimringfläche (26) der Rohrleitung (2) vorgesehen ist, wobei der Dichtring (30) derart ringkappenförmig ausgebildet ist, daß er auf das stimseitige Ende der Rohrieitung (2) aufsetzbar und dadurch geeignet ist, die Rohrwandung axial und radial außen sowie auch radial innen zu umschließen, indem der Dichtring (30) einen im wesentlichen U-förmigen Ringquerschnitt mit einem axial zwischen der Stufenfläche (10) und der Rohr-Stimringfläche (26) anzuordnenden Dichtungsabschnitt (32) und zwei Ringstegabschnitten (34, 36) zur kraftschlüssigen Anlage an der Außen- bzw. Innenfläche der Rohrwandung aufweist,
**dadurch gekennzeichnet, daß** für die kraftschlüssige Anlage an der jeweiligen Rohrwandungsfläche mindestens einer der beiden Ringstegabschnitte (34, 36), insbesondere der radial innere Ringstegabschnitt (34), im unmonfterten Zustand des Dichtrings (30) sich ausgehend von dem Dichtungsabschnitt (32) in einem spitzen Winkel (α') schräg zur Axialrichtung (38) in Richtung des anderen Ringstegabschnittes (36) ersteckt.

2. Rohrverschraubung nach Anspruch 1,
**dadurch gekennzeichnet, daß** der Dichtring (30) auf seiner auf der Stufenfläche (10) des Anschlußkörpers (3) zur Auflage gelangenden Seite umlaufende, elastisch oder plastisch verformbare Dichtrippen (40) und/oder Rillen (42) aufweist.

3. Rohrverschraubung nach Anspruch 1 oder 2,
**dadurch gekennzeichnet, daß** der Dichtring (30) auf seiner der Stufenfläche (10) des Anschlußkörper (3) zugekehrten Seite eine ringförmige, umlaufende Dichtlippe (44) aufweist, die sich insbesondere ausgehend vom äußeren Umfangsbereich im unmontierten Zustand schräg axial in Richtung der Stufenfläche (10) und radial nach innen erstreckt.

4. Rohrverschraubung nach einem der Ansprüche 1 bis 3,
**dadurch gekennzeichnet, daß** der Dichtring (30) in seinem äußeren Umfangsbereich zur Bildung von labyrinthdichtungsartigen Zonen radiale, umlaufende Dichtrippen (40) zur Anlage am Innenumfang der Aufnahmeöffnung (8) des Anschlußkörpers (3) und/oder radiale, umlaufende, rillenartige Vertiefungen (42) aufweist.

5. Rohrverschraubung nach einem der Ansprüche 1 bis 4,
**dadurch gekennzeichnet, daß** der Dichtring (30) aus einem durch Verpressen plastisch verformbaren Material, insbesondere aus PTFE, besteht

6. Rohrverschraubung nach einem der Ansprüche 1 bis 4,
**dadurch gekennzeichnet, daß** der Dichtring (30) aus einem beim Verpressen elastisch verformbaren Material, insbesondere einem Elastomer, besteht

7. Rohrverschraubung nach einem der Ansprüche 1 bis 6,
**dadurch gekennzeichnet, daß** der Anschlußkörper (3) einen die Aufnahmeöffnung (8) erweiternden Innenkonus (18) aufweist.

8. Rohrverschraubung nach Anspruch 7,
**dadurch gekennzeichnet, daß** das Rohr-Halteelement (15) von einem metallischen Schneidring (16) gebildet ist, der beim Anziehen des Verschraubungselementes (5) mit dem Innenkonus (18) des Anschlußkörpers (3) zum formschlüssigen Einschneiden in die Rohrleitung (2) zusammenwirkt, wobei der Dichtring (30) mit seinem radial äußeren Ringstegabschnitt (36) in einem Ringspalt einerseits radial zwischen der Rohrteitung (2) und der Aufnahmeöffnung (8) und gegebenenfalls dem Innenkonus (18) und andererseits axial zwischen der Stufenfläche (10) und dem Schneidring (16) verpreßt angeordnet ist.

9. Rohrverschraubung nach Anspruch 7,
**dadurch gekennzeichnet, daß** das Rohr-Halteelement (15) von einem umfangsgemäßen, fest mit der Rohrleitung (2) verbundenen, insbesondere einstückig durch Stauchumformen gebildeten Ringwulst (50) gebildet ist, der zur formschlüssigen Halterung der Rohrleitung (2) zwischen einer radialen Stimfläche (56) des Anschlußkörpers (3) und dem Überwurf-Verschraubungselement (5) gehalten ist

10. Rohrverschraubung nach Anspruch 7 und 9,
**dadurch gekennzeichnet, daß** daß die Dichtung (30) einen entsprechend dem Innenkonus (18) des Anschlußkörpers (3) erweiternd geformten Dichtabschnitt (62) aufweist, der gekammert im Bereich des Innenkonus (18) zwischen dem Anschlußkörper (3), der Rohrieitung (2) und dem bereichsweise an der Stirnfläche (56) des Anschlußkörpers (3) anliegenden Ringwulst (50) verpreßt angeordnet ist

11. Rohrverschraubung nach Anspruch 9 oder 10,
**dadurch gekennzeichnet, daß** die Rohrieitung (2) endseitig derart umgeformt ist, daß ihr freies, sich an den Ringwulst (50) anschließendes, achsparalleles Rohrende (2a) einen gegenüber dem ursprünglichen Rohrdurchmesser (D1) reduzierten Enddurchmesser (D2) aufweist, so daß innerhalb der Aufnahmeöffnung (8) des Anschlußkörpers (3) radial zwischen diesem und dem Rohrende (2a) eine Dichtungskammer zur Aufnahme des Dichtringes (30) gebildet ist.

12. Rohrverschraubung nach einem der Ansprüche 9 bis 11,
**dadurch gekennzeichnet, daß** die Rohrieitung (2) im Bereich des Ringwulstes (50) derart umgeformt ist, daß der Ringwulst (50) auf seiner dem Anschlußkörper (3) zugekehrten Seite einen Schulterabschnitt (52) mit einem zur Längsachse (38) gemessenen, stumpfen Hinterschneidungswinkel (α) größer 90° aufweist, so daß der Ringwulst (50) an der radialen Stirnfläche (56) des Anschlußkörpers (3) nur mit einem im wesentlichen linienförmigen Anlagekontaktbereich (58) zur Anlage gelangt.

13. Rohrverschraubung nach einem der Ansprüche 9 bis 12,
**dadurch gekennzeichnet, daß** das Verschraubungselement (5) als Normteil-Überwurfmutter (6) mit einem Innenkonus (60) zur Anlage an dem Ringwulst (50) der Rohrleitung (2) ausgebildet ist, wobei der Ringwulst (50) der Rohrleitung (2) auf seiner der Überwurfmutter (6) zugekehrten Seite eine Flankenfläche (64) aufweist, die zur flächigen Anlage in dem Innenkonus (60) der Überwurfmutter (6) mit einem entsprechend spitzen Winkel (β) schräg zur Längsachse (38) ausgerichtet ist

14. Rohrverschraubung nach Anspruch 12 oder 13,
**dadurch gekennzeichnet, daß** das freie Rohrende (2a) ausgehend von der axialen Lage des linienförmigen Anlagenkontaktbereiches (58) des Ringwulstes (50) eine Länge (L1) aufweist, die derart kürzer als die zwischen der Anschlußkörper-Stimfläche (56) und der inneren Stufenfläche (10) gemessene Tiefe (L2) der Aufnahmeöffnung (8) des Anschlußkörpers (3) ist, daß der axial zwischen der Stufenfläche (10) und dem Rohrende (2a) angeordnete Abschnitt (32) des Dichtringes (30) definiert verpreßt wird.

15. Rohrverschraubung nach einem der Ansprüche 1 bis 7,
**dadurch gekennzeichnet, daß** das Rohr-Halteelement (15) von einem Zahnring (74) gebildet ist, der mit einem Innenkonus (76) des als Überwurfschraube (72) ausgebildeten Verschraubungselementes (5) beim Anziehen derart zusammenwirkt, daß der Zahnring (74) mit mindestens einer, vorzugsweise mehreren inneren Schneidkanten (78) in die Rohrleitung (2) eingreift.

16. Rohrverschraubung nach Anspruch 15,
**dadurch gekennzeichnet, daß** axial zwischen der in ein Innengewinde des Anschlußkörpers (3) eingeschraubten Überwurfschraube (72) und einer radialen Anlagefläche (80) innerhalb des Anschlußkörpers (3) ein Stützring (82) zur Abstützung des Zahnringes (74) angeordnet ist

17. Rohrverschraubung nach Anspruch 16,
**dadurch gekennzeichnet, daß** der Stützring (82) auch zur Kammerung des Dichtringes (30) dient.

## Claims

1. Screwed pipe connection (1) for connecting a pipeline (2), in particular a metallic one, comprising a connecting body (3), a cap-type screwing element (5) which can be screwed to the connecting body (3), and a pipe-holding element (15) arranged between the connecting body (3) and the screwing element (5), the connecting body (3) having a receiving opening (8) for the pipeline (2) with a radial stepped surface (10) for axially supporting the pipeline (2), and a sealing ring (30) being provided for arrangement axially between the stepped surface (10) and an annular end surface (26) at the end of the pipeline (2), the sealing ring (30) being designed in the shape of an annular cap in such a manner that it can be placed onto the end of the pipeline (2) and, as a result, is capable bf surrounding the pipe wall axially and radially on the outside and also radially on the inside by the sealing ring (30) having an essentially U-shaped annular cross section with a sealing section (32) to be arranged axially between the stepped surface (10) and the annular end surface (26) of the pipe, and two annular web sections (34, 36) for the frictional bearing against the outer and inner surfaces of the pipe wall, **characterized in that** for the frictional bearing against the respective pipe wall surface, at least one of the two annular web sections (34, 36), in particular the radially inner annular web section (34), extends, in the unfitted state of the sealing ring (30), from the sealing section (32) obliquely with respect to the axial direction (38) at an acute angle (α') in the direction of the other annular web section (36).

2. Screwed pipe connection according to Claim 1, **characterized in that** the sealing ring (30) has, on its side coming to rest on the stepped surface (10) of the connecting body (3), circumferential, elastically or plastically deformable sealing ribs (40) and/or grooves (42).

3. Screwed pipe connection according to Claim 1 or 2, **characterized in that** the sealing ring (30) has, on its side facing the stepped surface (10) of the closing body (3), an annular, circumferential sealing lip (44) which extends, in the unfitted state, in particular from the outer circumferential region obliquely axially in the direction of the stepped surface (10) and radially inwards.

4. Screwed pipe connection according to one of Claims 1 to 3, **characterized in that** in order to form labyrinth-seal-like zones, the sealing ring (30) has, in its outer circumferential region, radial, circumferential sealing ribs (40) for bearing against the inner circumference of the receiving opening (8) of the connecting body (3) and/or radial, circumferential, groove-like depressions (42).

5. Screwed pipe connection according to one of Claims 1 to 4, **characterized in that** the sealing ring (30) consists of a material which can be plastically deformed by pressing, in particular PTFE.

6. Screwed pipe connection according to one of Claims 1 to 4, **characterized in that** the sealing ring (30) consists of a material which can be elastically deformed by pressing, in particular an elastomer.

7. Screwed pipe connection according to one of Claims 1 to 6, **characterized in that** the connecting body (3) has an inner cone (18) which widens the receiving opening (8).

8. Screwed pipe connection according to Claim 7, **characterized in that** the pipe-holding element (15) is formed by a metallic cutting ring (16) which, when the screwing element (5) is tightened, interacts with the inner cone (18) of the connecting body (3) in order to cut into the pipeline (2) in a form-fitting manner, the sealing ring (30), with its radially outer annular web section (36) in an annular gap, being arranged pressed at one end radially between the pipeline (2) and the receiving opening (8) and, if appropriate, the inner cone (18) and, at the other end, being arranged pressed axially between the stepped surface (10) and the cutting ring (16).

9. Screwed pipe connection according to Claim 7, **characterized in that** the pipe-holding element (15) is formed by a circumferential annular bead (50) which is connected fixedly to the pipeline (2), in particular is formed integrally by upsetting deformation and is held between a radial end surface (56) of the connecting body (3) and the cap-type screwing element (5) for the purpose of securing the pipeline (2) in a form-fitting manner.

10. Screwed pipe connection according to Claims 7 and 9, **characterized in that** the seal (30) has a sealing section (62) which is shaped such that it widens in a manner corresponding to the inner cone (18) of the connecting body (3) and is arranged in an enclosed manner in the region of the inner cone (18) pressed between the connecting body (3), the pipeline (2) and the annular bead (50), which bears in some regions against the end surface (56) of the connecting body (3).

11. Screwed pipe connection according to Claim 9 or 10, **characterized in that** the pipeline (2) is deformed on the end side in such a manner that its free, axially parallel pipe end (2a) which adjoins the annular bead (50) has a final diameter (D2) which is reduced with respect to the original pipe diameter (D1), with the result that within the receiving opening (8) of the connecting body (3) a sealing chamber for receiving the sealing ring (30) is formed radially between said connecting body and the pipe end (2a).

12. Screwed pipe connection according to one of Claims 9 to 11, **characterized in that** the pipeline (2) is deformed in the region of the annular bead (50) in such a manner that the annular bead (50) has, on its side facing the connecting body (3), a shoulder section (52) having, as measured with respect to the longitudinal axis (38), an obtuse undercut angle (α) of greater than 90°, with the result that the annular bead (50) only comes to bear against the radial end surface (56) of the connecting body (3) with an essentially linear bearing contact region (58).

13. Screwed pipe connection according to one of Claims 9 to 12, **characterized in that** the screwing element (5) is designed as a standard cap nut (6) having an inner cone (60) for bearing against the annular bead (50) of the pipeline (2), the annular bead (50) of the pipeline (2) having, on its side facing the cap nut (6), a flank surface (64) which is orientated obliquely with respect to the longitudinal axis (38) at a correspondingly acute angle (β) in order to bear flat in the inner cone (60) of the cap nut (6).

14. Screwed pipe connection according to Claim 12 or 13, **characterized in that** the free pipe end (2a) has, starting from the axial position of the linear bearing contact region (58) of the annular bead (50), a length (L1) which is shorter than the depth (L2) of the receiving opening (8) of the connecting body (3), as measured between the connecting-body end surface (56) and the inner stepped surface (10), to such an extent that that section (32) of the sealing ring (30) which is arranged axially between the stepped surface (10) and the pipe end (2a) is pressed in a defined manner.

15. Screwed pipe connection according to one of Claims 1 to 7, **characterized in that** the pipe-holding element (15) is formed by a toothed ring (74) which, during tightening, interacts with an inner cone (76) of the screwing element (5), which is designed as a cap screw (72), in such a manner that the toothed ring (74) engages in the pipeline (2) with at least one, preferably a plurality of, inner cutting edges (78).

16. Screwed pipe connection according to Claim 15, **characterized in that** a supporting ring (82) for supporting the toothed ring (74) is arranged axially between the cap screw (72), which is screwed into an inner thread of the connecting body (3), and a radial bearing surface (80) within the connecting body (3).

17. Screwed pipe connection according to Claim 16, **characterized in that** the supporting ring (82) also serves for enclosing the sealing ring (30).

## Revendications

1. Raccord vissé (1) pour raccorder un tuyau (2) en particulier métallique, comprenant un élément à vis à chapeau (5) pouvant être vissé avec le corps de raccordement (3) et un élément de maintien de tube (15) disposé entre le corps de raccordement (3) et l'élément à vis (5), le corps de raccordement (3) présentant une ouverture de logement (8) pour le tuyau (2) avec une surface radiale étagée (10) pour supporter le tuyau (2) dans le sens axial, et une bague d'étanchéité (30) étant prévue pour être disposée dans le sens axial entre la surface étagée (10) et une surface annulaire frontale (26) du tuyau (2) côté extrémité, ladite bague d'étanchéité (30) étant en forme de chapeau annulaire de sorte qu'elle peut être posée sur l'extrémité frontale du tuyau (2) et est par là même capable d'entourer la paroi du tuyau à l'extérieur dans le sens axial et radial et à l'intérieur dans le sens radial, puisqu'elle présente une section annulaire essentiellement en forme de U avec un segment d'étanchéité (32) à disposer dans le sens axial entre la surface étagée (10) et la surface annulaire frontale (26) du tuyau et deux segments annulaires en barrette (34, 36) pour créer un contact de manière solidaire par une liaison dynamique sur la face extérieure et la face intérieure de la paroi du tuyau, **caractérisé en ce que**, pour créer le contact de manière solidaire par une liaison dynamique sur chacune des surfaces de paroi du tuyau, au moins l'un des deux segments annulaires en barrette (34, 36), en particulier le segment intérieur radial (34), s'étend, lorsque la bague d'étanchéité (30) n'est pas montée, à partir du segment d'étanchéité (32) en formant un angle aigu (α) à l'oblique par rapport au sens axial (38), en direction de l'autre segment annulaire en barrette (36).

2. Raccord vissé selon la revendication 1, **caractérisé en ce que** la bague d'étanchéité (30) présente, sur sa face venant reposer sur la surface étagée (10) du corps de raccordement (3), des nervures d'étanchéité (40) et/ou des rainures (42) circonférentielles qui peuvent se déformer de manière élastique ou plastique.

3. Raccord vissé selon la revendication 1 ou 2, **caractérisé en ce que** la bague d'étanchéité (30) présente, sur sa face tournée vers la surface étagée (10) du corps de raccordement (3), une lèvre d'étanchéité (44) circonférentielle annulaire qui s'étend en particulier à partir de la zone périphérique extérieure, lorsque la bague d'étanchéité n'est pas montée, à l'oblique en direction de la surface étagée (10) dans le sens axial et vers l'intérieur dans le sens radial.

4. Raccord vissé selon l'une quelconque des revendications 1 à 3, **caractérisé en ce que** la bague d'étanchéité (30) présente, dans sa zone périphérique extérieure, pour former des zones du type de joint à labyrinthe, des nervures d'étanchéité circonférentielles radiales destinées à venir reposer sur le pourtour intérieur de l'ouverture de logement (8) du corps de raccordement (3) et/ou des creux (42) radiaux circonférentiels en forme de rainures.

5. Raccord vissé selon l'une quelconque des revendications 1 à 4, **caractérisé en ce que** la bague d'étanchéité (30) est constituée d'un matériau pouvant se déformer plastiquement par pressage, en particulier de PTFE.

6. Raccord vissé selon l'une quelconque des revendications 1 à 4, **caractérisé en ce que** la bague d'étanchéité (30) est constituée d'un matériau pouvant se déformer par compression, en particulier un élastomère.

7. Raccord vissé selon l'une quelconque des revendications 1 à 6, **caractérisé en ce que** le corps de raccordement (3) présente un cône intérieur (18) élargissant l'ouverture de logement (8).

8. Raccord vissé selon la revendication 7, **caractérisé en ce que** l'élément de maintien de tuyau (15) est formé par une bague coupante métallique (16) qui, au serrage de l'élément à vis (5), coopère avec le cône intérieur (18) du corps de raccordement (3) pour entailler de manière solidaire avec correspondance de forme le tuyau (2), la bague d'étanchéité (30) étant, avec son segment annulaire extérieur radial en barrette (36), disposée en étant comprimée dans une fente annulaire, d'une part dans le sens radial entre le tuyau (2) et l'ouverture de logement (8) et, éventuellement, le cône intérieur (18) et, d'autre part, dans le sens axial, entre la surface étagée (10) et la bague coupante (16).

9. Raccord vissé selon la revendication 7, **caractérisé en ce que** l'élément de maintien de tuyau (15) est formé par un bourrelet annulaire (50) circonférentiel, relié de manière fixe au tuyau (2), en particulier formé d'une seule pièce par refoulement, qui est maintenu entre une surface frontale radiale (56) du corps de raccordement (3) et l'élément à vis à chapeau (5) pour maintenir de manière solidaire avec correspondance de forme le tuyau (2).

10. Raccord vissé de tuyau selon les revendications 7 et 9, **caractérisé en ce que** le joint d'étanchéité (30) présente un segment d'étanchéité (62) formé en s'élargissant suivant le cône intérieur (18) du corps de raccordement (3) qui, compartimenté dans la zone du cône intérieur (18), est disposé en étant comprimé entre le corps de raccordement (3), le tuyau (2) et le bourrelet annulaire (50) reposant par endroits contre la surface frontale (56) du corps de raccordement (3).

11. Raccord vissé selon la revendication 9 ou 10, **caractérisé en ce que** le tuyau (2) est formé de manière à ce que son extrémité (2a) libre parallèle à l'axe, faisant suite au bourrelet annulaire (50), présente un diamètre terminal (D2) réduit par rapport au diamètre d'origine (D1), de sorte qu'une chambre d'étanchéité destinée à loger la bague d'étanchéité (30) est formée à l'intérieur de l'ouverture de logement (8) du corps de raccordement (3), dans le sens radial entre ledit corps de raccordement et l'extrémité du tuyau (2a).

12. Raccord vissé selon l'une quelconque des revendications 9 à 11, **caractérisé en ce que** le tuyau (2) est formé dans la zone du bourrelet annulaire (50) de manière à ce que ledit bourrelet présente, sur sa face tournée vers le corps de raccordement (3), un segment d'épaulement (52) formant un angle d'entaille vers l'arrière (α) obtus, supérieur à 90° mesuré par rapport à l'axe longitudinal (38), de sorte que le bourrelet annulaire (50) vient reposer contre la surface frontale radiale (56) du corps de raccordement (3) seulement avec une zone de contact essentiellement linéaire (58).

13. Raccord vissé selon l'une quelconque des revendications 9 à 12, **caractérisé en ce que** l'élément à vis (5) est formé comme un écrou à chapeau standard (6) avec un cône intérieur (60) destiné à reposer sur le bourrelet annulaire (50) du tuyau (2), ledit bourrelet annulaire présentant, sur sa face tournée vers l'écrou à chapeau (6) une surface de flanc (64) qui, pour créer un contact de surface dans le cône intérieur (60) de l'écrou à chapeau (6), est orientée à l'oblique par rapport à l'axe longitudinal (38) avec un angle aigu correspondant (β).

14. Raccord vissé selon la revendication 12 ou 13, **caractérisé en ce que** l'extrémité libre du tuyau (2a) présente, à partir de la position axiale de la zone de contact linéaire (58) du bourrelet annulaire (50), une longueur (L1) qui est plus courte que la profondeur (L2) de l'ouverture de logement (8) du corps de raccordement (3), mesurée entre la surface frontale du corps de raccordement (56) et la surface étagée intérieure (10), de sorte que le segment (32) de la bague d'étanchéité (30), disposé dans le sens axial entre la surface étagée (10) et l'extrémité du tuyau (2a) est comprimé de manière définie.

15. Raccord vissé selon l'une quelconque des revendications 1 à 7, **caractérisé en ce que** l'élément de maintien de tuyau (15) est formé par une bague dentée (74) qui coopère, lors du serrage, avec un cône intérieur (76) de l'élément à vis (5) formé comme une vis chapeau (72), de sorte que la bague dentée (74) s'insère dans le tuyau (2) avec au moins une, de préférence plusieurs arêtes intérieures coupantes (78).

16. Raccord vissé selon la revendication 15, **caractérisé en ce qu'**une bague support (82) destinée à supporter la bague dentée (74) est disposée à l'intérieur du corps de raccordement (3), dans le sens axial entre la vis chapeau (72) vissée dans un filetage intérieur du corps de raccordement (3) et une surface de contact radiale (80).

17. Raccord vissé selon la revendication 16, **caractérisé en ce que** la bague support (82) sert aussi à compartimenter la bague d'étanchéité (30.
